# DEMANDE DE BREVET EUROPEEN

(11) **EP 1 911 346 A1**
(43) Date de publication de la demande: **16.04.2008**
(21) Numéro de dépôt: 07301428.4
(22) Date de dépôt: 03.10.2007
(51) Int. Cl.: A01G 17/06

(54) **Ecarteur pour le relevage de la vigne**

(30) Priorité: 13.10.2006 FR 0654265
(71) Demandeur: SCDC, Société Anonyme, 51270 Orbais L'Abbaye (FR)
(72) Inventeur: Casters, Denis, 51270 Mareuil-en-Brie (FR)
(74) Mandataire: Rhein, Alain

(57) **Abrégé**

L'invention concerne un écarteur (4) pour le relevage de la vigne et comportant, d'une part, un moyen (9) pour son association à un piquet de vigne (1) ou analogue et, d'autre part, une branche (5) s'étendant à partir de ce moyen d'association (9) et présentant une extrémité libre (6) comportant un moyen (8) pour la réception d'un fil de relevage (3).

Cet écarteur (4) est caractérisé par le fait qu'il est conçu, d'une part, pour que le moyen d'association (9) soit engagé autour du piquet (1) de manière libre en translation le long de ce dernier (1) et, d'autre part et sous l'effet de la gravité ou d'une contrainte descendante exercée par le fil de relevage (3) sur la branche (5) de l'écarteur (4), pour basculer par rapport au piquet (1) et pour que ce moyen d'association (9) puisse au moins prendre appui contre ce piquet (1), de part et d'autre de celui-ci (1), ceci en vue de l'immobilisation en translation de l'écarteur (4) le long dudit piquet (1).

## Description

L'invention a trait à un écarteur pour le relevage de la vigne.

Cette invention concerne le domaine de la fabrication des accessoires pour le traitement et la culture de la végétation et trouvera une application toute particulière dans le domaine de la vigne et du vignoble.

Une telle vigne se présente sous la forme d'une pluralité de rangées de pieds de vigne, généralement, parallèles et au sein desquelles lesdits pieds sont plantés de manière sensiblement alignée et régulièrement espacés.

Une telle vigne comporte, également, des accessoires pour son traitement et sa culture. De tels accessoires se présentent sous la forme, d'une part, de piquets de vigne intercalés entre deux pieds de vigne successifs et, d'autre part, de fils de palissage s'étendant, de manière parallèle, le long d'une rangée de pieds de vigne, de part et d'autre d'une telle rangée, et, d'autre part encore, d'écarteurs conçus pour rendre un tel fil de palissage solidaire d'un tel piquet.

L'on connaît, d'ores et déjà, un certain nombre d'écarteurs dont ceux décrits dans le document EP-1.230.840. Ces écarteurs adoptent la forme d'une branche présentant deux extrémités dont, d'une part, une première extrémité comportant une boucle fermée pour la réception d'un fil de palissage et, d'autre part, une seconde extrémité comportant des moyens conçus pour autoriser le basculement d'un tel écarteur par rapport à un piquet. On observera que c'est, plus particulièrement, par l'intermédiaire de ces moyens de basculement que ledit écarteur est rendu solidaire dudit piquet.

En fait et pour ce faire, ces moyens de basculement coopèrent avec des moyens de guidage rendus solidaires d'un tel piquet (fil métallique en "U" planté dans le piquet), définis au niveau d'un tel piquet (lumière, découpe) ou, encore, au niveau d'une embase rendue solidaire d'un tel piquet.

Ainsi, le montage d'un tel écarteur sur un piquet nécessite, impérativement, soit de faire appel à un type de piquet bien spécifique au niveau duquel sont définis des moyens de guidage (lumière découpe), soit de recourir à une pièce additionnelle (embase, fil en "U") qui, d'une part, est spécifique à la nature du piquet (bois, métal) et, d'autre part, nécessite une opération additionnelle pour sa fixation sur un tel piquet.

Un autre inconvénient consiste en ce que ces moyens de guidage permettent un déplacement de l'écarteur le long du piquet sur une course correspondant à celle de la longueur desdits moyens de guidage. Les possibilités de déplacement de l'écarteur le long du piquet sont, par conséquent, limitées et ne permettent pas à cet écarteur d'accompagner la croissance de la végétation à tous les stades de son développement. Afin de réaliser un tel accompagnement, il convient, soit de déplacer ou d'ajouter une pièce additionnelle, soit de démonter l'écarteur pour le remonter au niveau d'un autre moyen de guidage que comporte le piquet.

La présente invention se veut à même de remédier aux inconvénients des écarteurs de l'état de la technique.

A cet effet, l'invention concerne un écarteur pour le relevage de la vigne et comportant, d'une part, un moyen pour son association à un piquet de vigne ou analogue et, d'autre part, une branche s'étendant à partir de ce moyen d'association et présentant une extrémité libre comportant un moyen pour la réception d'un fil de relevage. Cet écarteur est conçu, d'une part, pour que le moyen d'association soit engagé autour du piquet de manière libre en translation le long de ce dernier et, d'autre part et sous l'effet de la gravité ou d'une contrainte descendante exercée par le fil de relevage sur la branche de l'écarteur, pour basculer par rapport au piquet et pour que ce moyen d'association puisse au moins prendre appui contre ce piquet, de part et d'autre de celui-ci, ceci en vue de l'immobilisation en translation de l'écarteur le long dudit piquet.

Selon une autre caractéristique de l'invention, cet écarteur est conçu pour que la branche de l'écarteur vienne s'arc-bouter contre le piquet sous l'effet d'une contrainte descendante exercée par le fil de relevage sur la branche de l'écarteur

Une caractéristique additionnelle consiste en ce que le moyen d'association de l'écarteur est dimensionné et/ou conformé pour, d'une part, coulisser librement le long du piquet lorsque l'axe du piquet est sensiblement parallèle à un axe perpendiculaire au plan médian du moyen d'association et, d'autre part, pour au moins prendre appui contre ledit piquet lorsque cet axe dévie par rapport à l'axe du piquet sous l'effet de la gravité ou de la contrainte.

En fait, ce moyen d'association se présente sous la forme d'un organe faisant au moins en partie le tour du piquet, par l'extérieur de celui-ci. Un tel organe est constitué par une boucle, un crochet, un manchon ou autre et présente une forme adaptée à la section du piquet.

Une autre caractéristique consiste en ce que la branche de l'écarteur s'étend, latéralement, par rapport au moyen d'association et forme, par rapport à un plan médian de ce dernier, un angle compris entre 20 et 90°, de préférence entre 45 et 65°, notamment de l'ordre de 55°

En fait, le moyen d'association peut être constitué par une boucle définie dans le prolongement de la branche de l'écarteur et présentant une extrémité libre pourvue d'un moyen pour coopérer avec cette branche en vue de la fermeture de cette boucle.

Les avantages de cet écarteur consistent en ce qu'il est autonome et peut être directement monté sur un piquet sans nécessiter ni pièce additionnelle, ni aménagement particulier au niveau de ce piquet.

Un autre avantage consiste en ce que cet écarteur peut, d'une part, coulisser librement le long du piquet en vue d'être amené par un opérateur ou par une machine dans une position appropriée de service lorsque cet écarteur adopte une certaine position (orientation) par rapport au piquet et, d'autre part, être immobilisé dans une position appropriée sous l'effet de son propre poids ou sous celui d'une contrainte exercée sur la branche, notamment par la végétation (autre position).

Ceci permet, avantageusement, de déplacer de manière particulièrement aisée l'écarteur le long du piquet et de l'amener, sans effort, exactement à l'endroit souhaité. Il est, ainsi, possible d'ajuster aisément la hauteur de cet écarteur par rapport au piquet sans qu'il soit nécessaire de démonter l'écarteur du piquet ou de procéder à des manoeuvres fastidieuses comme celle requises pour les écarteurs de l'état de l'art.

On observera que sous l'effet d'une contrainte exercée sur la branche d'un tel écarteur, cette branche vient, en fait, s'arc-bouter sur le piquet ayant pour effet de renforcer d'autant plus l'immobilisation de l'écarteur que la contrainte exercée sur lui est importante.

Selon un autre avantage, le moyen d'association peut être dimensionné et/ou conformé de manière à permettre son engagement sur n'importe quel piquet. Ainsi, il est possible de conformer ce moyen d'association en sorte de pouvoir être engagé sur un piquet rond, ovale, rectangulaire ou carré, notamment en conférant à ce moyen d'association une forme similaire à celle du piquet. Il est aussi possible de dimensionner ce moyen d'association de manière appropriée afin de pouvoir être engagé sur un piquet de section déterminée. En pratique, il est possible de réaliser un nombre restreint d'écarteurs présentant, chacun, un moyen d'association dont les dimensions sont différentes et sont judicieusement choisies pour permettre le montage d'un tel écarteur sur des piquets de section différentes.

Encore un autre avantage consiste en ce que cet écarteur présente une structure particulièrement simple ce qui facilite considérablement son processus de fabrication. De plus, la conception particulièrement astucieuse de cet écarteur rend son utilisation particulièrement simple et intuitive.

L'invention sera mieux comprise à la lumière de la description qui va suivre et qui se réfère aux dessins joints en annexe dans lesquels :
- la figure 1 est une vue schématisée d'un écarteur conforme à la présente invention;
- la figure 2 est une vue schématisée de l'écarteur illustré figure 1 engagé sur un piquet de vigne et adoptant une position de translation libre par rapport à ce piquet;
- la figure 3 est une vue similaire à la figure 2 et correspondant au même écarteur adoptant une position d'immobilisation par rapport au piquet;
- la figure 4 est une vue schématisée et en perspective correspondant à un autre mode de réalisation d'un écarteur conforme à l'invention.

La présente invention concerne le domaine de la fabrication des accessoires pour le traitement et la culture de la végétation, plus particulièrement celle de la vigne.

De manière connue en soi, une telle vigne se présente sous la forme d'au moins une rangée de pieds de vigne plantés de manière sensiblement alignée et régulièrement espacés.

Les accessoires pour une telle vigne sont constitués, d'une part, par des piquets 1 de vigne intercalés entre deux pieds de vigne successifs et plantés le long d'une rangée de pieds de vigne, usuellement, de manière régulièrement espacée. Un tel piquet 1 de vigne s'étend, usuellement, le long d'un axe 2 qui, dans la plupart des cas, est perpendiculaire à la surface du sol dans lequel un tel piquet 1 est planté.

D'autre part, ces accessoires se présentent sous la forme de fils de palissage s'étendant le long d'une rangée de pieds de vigne et constitués, au moins en partie, par des fils de relevage 3 disposés de part et d'autre des pieds de vigne. Ces fils de relevage 3 sont conçus pour adopter, d'une part, une première position (dite position basse) durant une première phase de croissance et de développement de la vigne et, d'autre part, une seconde position (dite position de relevage) durant une seconde phase de croissance et de développement de cette vigne. C'est, plus particulièrement, au cours d'une opération dite de relevage de la vigne que ces fils de relevage 3 sont amenés de ladite position basse vers ladite position de relevage dans laquelle ces fils 3 sont maintenus.

Lesdits accessoires sont, encore, constitués par des écarteurs 4 conçus pour rendre un tel fil de relevage 3 solidaire d'un piquet de vigne 1.

A ce propos, on observera que, de manière connue en soi, un tel écarteur 4 comporte une branche 5 présentant deux extrémités 6; 7 dont l'une 6, dite extrémité libre, est pourvue d'un moyen 8 pour la réception d'un fil de relevage 3.

L'autre extrémité 7 de cette branche 5 est pourvue d'un moyen 9 pour l'association de cet écarteur 4 à un piquet de vigne 1 ou analogue. C'est, plus particulièrement, à partir de ce moyen d'association 9 que s'étend la branche 5 d'un tel écarteur 4 comportant un tel moyen d'association 9.

Selon l'invention, ledit écarteur 4 est conçu pour que le moyen d'association 9 soit engagé autour du piquet 1 de manière libre en translation le long de ce dernier 1. Cet écarteur 4 est, également, conçu pour basculer par rapport au piquet 1 et pour que, dans une telle position de basculement, ledit moyen d'association 9 puisse au moins prendre appui contre ce piquet 1, de part et d'autre de celui-ci 1. En fait, un tel basculement s'opère sous l'effet de la gravité ou d'une contrainte descendante exercée par le fil de relevage 3 sur la branche 5 de l'écarteur 4 (plus particulièrement sous l'effet du poids de la végétation reposant sur un tel fil 3), et se traduit, au travers de ladite prise d'appui du moyen d'association 9 contre le piquet 1, par une immobilisation en translation de l'écarteur 4 le long dudit piquet 1.

En fait, cet écarteur 4 est, alors, conçu en sorte qu'une telle liberté de translation et une telle prise d'appui soient assurées quelles que soient la forme (rond, ovale, carré, rectangulaire, polygonal...) et la nature (bois, métal, matériau synthétique...) du piquet 1.

Tel qu'évoqué ci-dessus, ledit moyen d'association 9 prend au moins appui contre le piquet 1, de part et d'autre de celui-ci 1.

A ce propos, il convient d'observer que ledit écarteur 4 est, en fait, conçu pour que, en cas de contrainte descendante exercée par le fil de relevage 3 sur la branche 5 de l'écarteur 4, cette branche 5 vienne s'arc-bouter contre le piquet 1.

On observera que ce phénomène d'arc-boutement augmente l'efficacité de l'immobilisation de l'écarteur 4 par rapport au piquet 1, ce phénomène se renforçant, notamment, avec la contrainte exercée par le fil 3 sur la branche 5 de cet écarteur 4, par exemple sous l'effet de la végétation.

Tel que visible sur les figures en annexe, ledit écarteur 4 est associé à un piquet de vigne 1 en engageant le moyen d'association 9 que comporte cet écarteur 4 autour d'un tel piquet 1.

Selon l'invention, c'est, plus particulièrement, ce moyen d'association 9 qui est, alors, dimensionné et/ou conformé en sorte de permettre audit écarteur 4, d'une part, d'être libre en translation le long du piquet 1 et, d'autre part, d'au moins pouvoir prendre appui contre le piquet 1 par basculement, ceci dans les conditions susmentionnées.

En fait, un tel moyen d'association 9 se présente sous la forme d'un organe faisant au moins en partie le tour du piquet 1, par l'extérieur de celui-ci 1.

Tel qu'évoqué ci-dessus, la liberté en translation et la prise d'appui sont assurées quelles que soient la forme et la nature du piquet 1.

Aussi et selon un mode de réalisation préféré de l'invention, cet organe présente une forme adaptée (de préférence similaire, voire identique) à la section du piquet 1 autour duquel cet organe est engagé.

Ainsi, un tel organe peut présenter une forme polygonale, de préférence carrée, rectangulaire, ronde ou ovale.

Une autre caractéristique de l'invention consiste en ce qu'un tel organe peut présenter des dimensions différentes. En fait, ces dimensions correspondent, plus particulièrement, à celles de la section inscrite d'un piquet 1 destiné à y être engagé. Un mode particulier de réalisation consiste à réaliser un écarteur 4 dont le moyen d'association 9 est susceptible de recevoir un piquet 1 dont la section correspond à une certaine gamme de sections. En fait, une telle manière de procéder permet, avantageusement, de réaliser un nombre restreint d'écarteurs différents (notamment 3) permettant d'être adaptés à toutes les sections de piquets 1 existants.

Selon un premier mode de réalisation non représenté, un tel organe peut, en fait, être constitué par un manchon ou analogue.

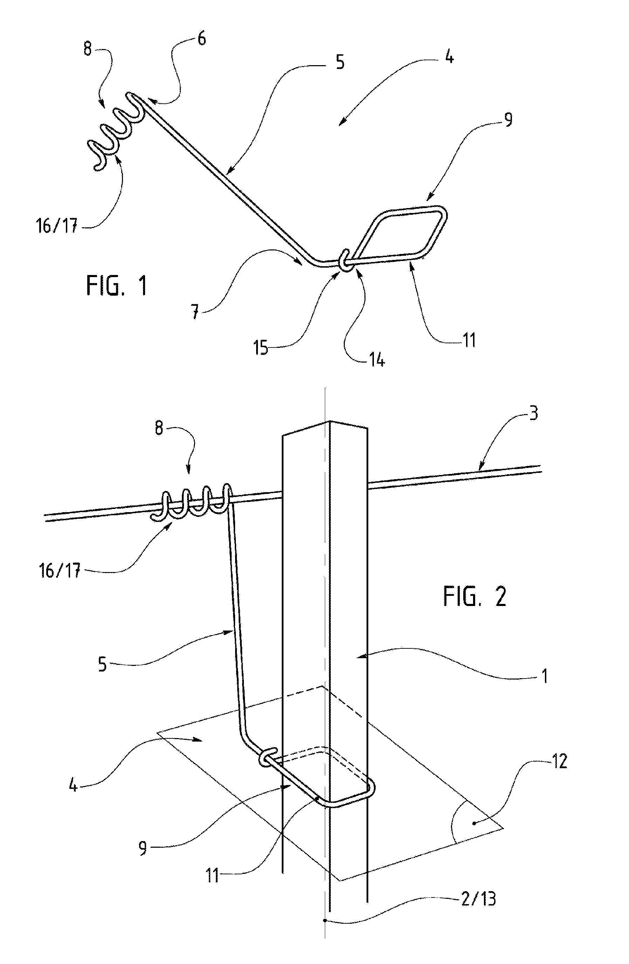

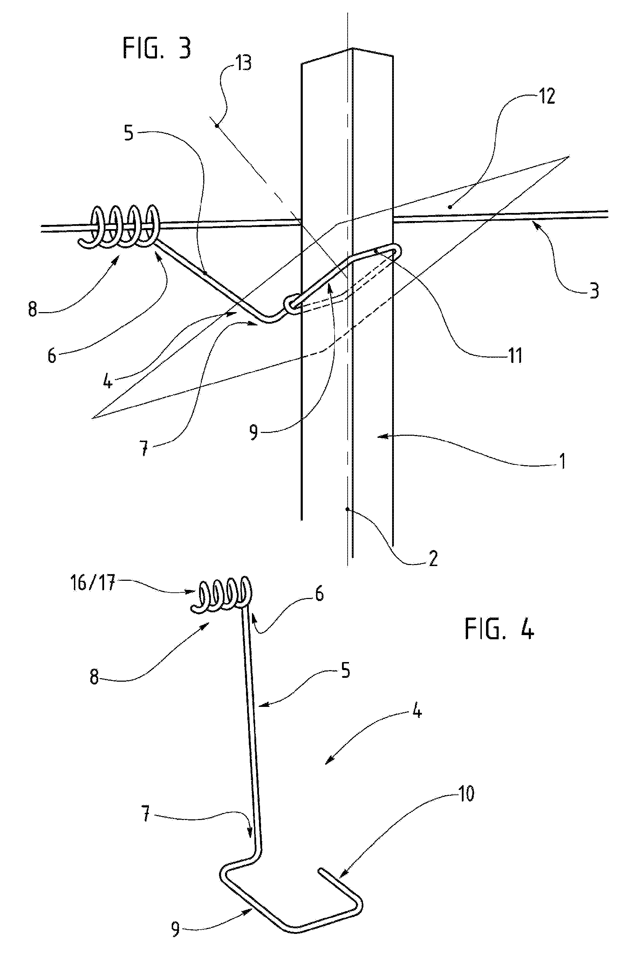

Cependant et selon un autre mode de réalisation, un tel organe adopte la forme d'un crochet 10 (figure 4) ou, et de préférence, celle d'une boucle 11 (figures 1 à 3).

Selon une autre caractéristique de l'invention, quelle que soit la forme de cet organe, il est possible de définir, au niveau dudit moyen d'association 9, un plan médian 12 que présente, alors, ce moyen d'association 9.

Ainsi, l'invention consiste en ce que le moyen d'association 9 de l'écarteur 4 est, alors, dimensionné et/ou conformé pour, d'une part, coulisser librement le long du piquet 1 lorsque l'axe 2 du piquet 1 est sensiblement parallèle à un axe 13 perpendiculaire au plan médian 12 du moyen d'association 9 et, d'autre part, pour au moins prendre appui contre ledit piquet 1 lorsque cet axe 13 dévie par rapport à l'axe 2 du piquet 1 sous l'effet de la gravité ou d'une contrainte telle que susmentionnée.

Tel qu'évoqué ci-dessus, l'écarteur 4 est conçu en sorte que la branche 5 s'étende à partir dudit moyen d'association 9.

En fait et tel que visible sur les figures en annexe, une telle branche 5 s'étend, latéralement, par rapport à ce moyen d'association 9 et forme, par rapport au plan médian 12 de ce dernier 9, un angle déterminé.

En fait, cet angle doit permettre de concilier, d'une part, la libre translation de l'écarteur 4 et, d'autre part, sa prise d'appui sur le piquet 1 et, plus particulièrement, son immobilisation de manière appropriée sur le piquet 1.

A ce propos, on observera que cet angle est, alors, compris entre 20 et 90°, de préférence compris entre 45 et 65°, notamment de l'ordre de 55°.

Selon un premier mode de réalisation non représenté et correspondant à un écarteur 4 comportant un manchon, la branche 5 d'un tel écarteur 4 peut être rapportée sur un tel manchon, notamment par soudure.

Cependant et selon un mode de réalisation préféré de l'invention, un tel moyen d'association 9 se situe dans le prolongement de la branche 5 de l'écarteur 4.

Un tel mode de réalisation est envisageable pour un moyen d'association 9 adoptant la forme d'un crochet 10 (figure 4) ou d'une boucle 11 (figure 1 à 3) tel que susmentionné.

A ce propos, on observera que, dans un pareil cas, la boucle 11 du moyen d'association 9 peut être définie dans le prolongement de la branche 5 de l'écarteur 4. Cette boucle 11 présente une extrémité libre 14 pourvue d'un moyen 15 pour coopérer avec cette branche 5 en vue de la fermeture de cette boucle 11. Un tel moyen de coopération 15 est, de préférence, constitué par un moyen d'accrochage (crochet) ou analogue.

Selon une autre caractéristique de l'invention, le moyen 8 pour la réception d'un fil de relevage 3 est constitué par un moyen 16 pour conférer une orientation déterminée à la branche 5 de l'écarteur 4 par rapport au fil de relevage 3 auquel cette branche 5 est associée.

Un tel moyen d'orientation 16 est constitué par une spirale 17 dont l'axe s'étend, d'une part, avec une orientation déterminée par rapport à la branche 5 de l'écarteur 4 et, d'autre part, de manière parallèle au fil de relevage 3.

Une telle spirale 17 comporte des spires (de préférence de diamètre sensiblement identique) qui sont non jointives et qui présentent un espacement entre elles autorisant l'engagement, entre deux spires 17, d'un fil de relevage 3.

Un tel mode de réalisation permet un engagement d'un fil de relevage 3 dans un tel moyen de réception 8 de manière particulièrement aisée et intuitive par rapport à un engagement dans une boucle fermée d'un écarteur de l'état de l'art.

Une telle spirale se situe, en fait, dans le prolongement de l'extrémité libre 6 de la branche 5 de l'écarteur 4.

Selon une autre caractéristique de l'invention, l'écarteur 4 est constitué par une seule et unique pièce.

En fait, un tel écarteur 4 peut, alors, être réalisé par déformation (plus particulièrement par pliage) à partir d'un unique fil, notamment métallique.

On observera qu'une telle déformation permet, alors, de définir, au niveau de cet écarteur 4, la branche 5, le moyen de réception 8 ainsi que le moyen d'association 9.

Tel qu'il ressort de ce qui précède, l'écarteur 4 selon l'invention est conçu pour au moins prendre appui contre le piquet de vigne 1 en vue de son immobilisation en translation par rapport à ce dernier 1.

Un tel écarteur 4 et/ou ledit piquet 1 sont, alors, réalisés en un matériau permettant, de manière efficace, une telle immobilisation. Un autre mode de réalisation consiste, encore, en ce qu'un tel écarteur 4 et/ou un tel piquet 1 peuvent présenter un état de surface (naturellement ou par traitement, notamment par application d'un revêtement approprié) permettant d'assurer une telle immobilisation.

Afin de renforcer une telle immobilisation, il est possible (mais aucunement obligatoire) de permettre à un tel écarteur 4 (plus particulièrement à son moyen d'association 9) de coopérer avec des moyens d'accrochage (plus particulièrement sous forme d'encoches, ergots, linguets ou analogue) que comporte un tel piquet 1.

Tel qu'évoqué ci-dessus, les fils de relevage 3 sont amenés dans une position de relevage au cours d'une opération de relevage de la vigne, position dans laquelle ces fils 3 sont maintenus. A ce propos, il convient d'observer que, dans une telle position de relevage, l'écarteur 4 conforme à l'invention peut, alors, adopter une position dans laquelle il est libre en translation le long du piquet 1.

Il convient, alors, d'assurer le maintien des fils de relevage 3 en position de relevage ce qui peut, par exemple (mais de manière aucunement limitative), être réalisé, soit en assurant la coopération entre l'écarteur 4 (plus particulièrement son moyen d'association 9) avec un moyen d'accrochage (plus particulièrement sous forme d'encoches, ergots, linguets ou analogue) que comporte le piquet 1 sur lequel est engagé cet écarteur 4, soit en assurant une coopération d'un fil de palissage 3 directement avec un tel moyen d'accrochage.

## Revendications

1. Ecarteur (4) pour le relevage de la vigne et comportant, d'une part, un moyen (9) pour son association à un piquet de vigne (1) ou analogue et, d'autre part, une branche (5) s'étendant à partir de ce moyen d'association (9) et présentant une extrémité libre (6) comportant un moyen (8) pour la réception d'un fil de relevage (3), **caractérisé par le fait que** l'écarteur (4) est conçu, d'une part, pour que le moyen d'association (9) soit engagé autour du piquet (1) de manière libre en translation le long de ce dernier (1) et, d'autre part et sous l'effet de la gravité ou d'une contrainte descendante exercée par le fil de relevage (3) sur la branche (5) de l'écarteur (4), pour basculer par rapport au piquet (1) et pour que ce moyen d'association (9) puisse au moins prendre appui contre ce piquet (1), de part et d'autre de celui-ci (1), ceci en vue de l'immobilisation en translation de l'écarteur (4) le long dudit piquet (1).

2. Ecarteur (4) selon la revendication 1, **caractérisé par le fait qu'**il est conçu pour que la branche (5) de l'écarteur (4) vienne s'arc-bouter contre le piquet (1) sous l'effet d'une contrainte descendante exercée par le fil de relevage (3) sur la branche (5) de l'écarteur (4).

3. Ecarteur (4) selon l'une quelconque des revendications précédentes, **caractérisé par le fait que** le moyen d'association (9) de l'écarteur (4) est dimensionné et/ou conformé pour, d'une part, coulisser librement le long du piquet (1) lorsque l'axe (2) du piquet (1) est sensiblement parallèle à un axe perpendiculaire (13) au plan médian (12) du moyen d'association (9) et, d'autre part, pour au moins prendre appui contre ledit piquet (1) lorsque cet axe (13) dévie par rapport à l'axe (2) du piquet (1) sous l'effet de la gravité ou de la contrainte.

4. Ecarteur (4) selon l'une quelconque des revendications précédentes, **caractérisé par le fait que** le moyen d'association (9) se présente sous la forme d'un organe faisant au moins en partie le tour du piquet (1), par l'extérieur de celui-ci (1).

5. Ecarteur (4) selon la revendication 4, **caractérisé par le fait que** l'organe est constitué par une boucle (11), un crochet (10), un manchon ou autre.

6. Ecarteur (4) selon l'une quelconque des revendications 4 ou 5, **caractérisé par le fait que** l'organe présente une forme adaptée à la section du piquet (1), notamment une forme polygonale, de préférence carrée, rectangulaire, ronde ou ovale.

7. Ecarteur (4) selon l'une quelconque des revendications précédentes, **caractérisé par le fait que** la branche (5) de l'écarteur (4) s'étend, latéralement, par rapport au moyen d'association (9) et forme, par rapport à un plan médian (12) de ce dernier (9), un angle compris entre 20 et 90°, de préférence compris entre 45 et 65°, notamment de l'ordre de 55°

8. Ecarteur (4) selon l'une quelconque des revendications précédentes, **caractérisé par le fait que** le moyen d'association (9) se situe dans le prolongement de la branche (5) de 1 ' écarteur (4).

9. Ecarteur (4) selon l'une quelconque des revendications précédentes, **caractérisé par le fait que** le moyen d'association (9) est constitué par une boucle (11) définie dans le prolongement de la branche (5) de l'écarteur (4) et présentant une extrémité libre (14) pourvue d'un moyen (15) pour coopérer avec cette branche (5) en vue de la fermeture de cette boucle (11).

10. Ecarteur (4) selon l'une quelconque des revendications précédentes, **caractérisé par le fait que** le moyen (8) pour la réception d'un fil de relevage (3) est constitué par un moyen (16) pour conférer une orientation déterminée à la branche (5) de l'écarteur (4) par rapport au fil de relevage (3) auquel cette branche (5) est associée.

11. Ecarteur (4) selon l'une quelconque des revendications précédentes, **caractérisé par le fait que** l'écarteur (4) est réalisé par déformation à partir d'un unique fil, notamment métallique.
